Europäisches Patentamt

European Patent Office

Office européen des brevets

(11) Publication number: **0 227 239**
**B1**

(12) **EUROPEAN PATENT SPECIFICATION**

(45) Date of publication of patent specification: **14.03.90**

(21) Application number: **86308021.4**

(22) Date of filing: **16.10.86**

(51) Int. Cl.⁵: **B 64 D 11/06**

(54) Adjustable- width seating for vehicles.

(30) Priority: **18.10.85 GB 8525701**

(43) Date of publication of application:
**01.07.87 Bulletin 87/27**

(45) Publication of the grant of the patent:
**14.03.90 Bulletin 90/11**

(84) Designated Contracting States:
**DE FR GB IT**

(56) References cited:
**EP-A-0 148 619**
**GB-A-1 037 972**

(73) Proprietor: **FLIGHT EQUIPMENT &
ENGINEERING LIMITED
Asheridge Road
Chesham Buckinghamshire, HP5 2QB (GB)**

(72) Inventor: **Wain, Nicholas David
26, Avery Avenue Downley
High Wycombe Buckinghamshire, HP13 5UE
(GB)**

(74) Representative: **Lishman, Peter David
Aston Farm House Newtown Lane Shustoke
Coleshill Warwickshire B46 2SD (GB)**

Courier Press, Leamington Spa, England.

## Description

In passenger-carrying vehicles, particularly aircraft, it is common to provide seats of different widths for passengers travelling on different classes of fare. For example, a seat provided for a passenger travelling "First Class" is usually wider (and also usually designed to provide greater comfort) than seats provided for passengers travelling on the "Tourist Class" fare.

Vehicles are commonly used to transport passengers travelling on different classes of fare. The numbers of passengers travelling on the different classes is likely to vary from one journey to another. It is therefore a common practice to provide an adjustable seating unit comprising at least one backrest part and at least one bottom part for a plurality of seats abreast, fixed armrests at the sides of the unit and laterally-movable intermediate armrests defining and separating the seats. The intermediate armrests are movable between laterally-spaced positions so that the width of the seats defined by them can be adjusted, for example, between journeys, to accommodate passengers in different fare classes. This invention concerns adjustable seating units of this kind.

Typically, a "First Class" seat for an aircraft has an overall width about one-and-a-half times the width of a "Tourist Class" seat. It is therefore convenient to make an adjustable seating unit of the kind described in the previous paragraph of overall width sufficient to provide a row of three narrower seats abreast for "Toursit Class" passengers. Such a unit can be adjusted readily to provide two wider seats abreast for "First Class" passengers. Fixed armrests are provided at the sides of the unit and two intermediate armrests are provided, each of which can be located in two alternative laterally-spaced operative positions. In the first position, all four armrests are equally spaced, defining seats for three "Tourist Class" passengers. In the second position, the two intermediate armrests are each located closer to the centre of the row so as to define with the fixed armrests two wider seats for "First Class" passengers. In one such arrangement, disclosed in British Patent Specification No. 1,037,972, from which the prior-art portion of claim 1 has been derived, each intermediate armrest has a plug element which can be inserted selectively into either of two laterally-spaced sockets provided in the seating unit at the two alternative positions.

This arrangement has a disadvantage that the intermediate armrests may be removed from their sockets by passengers. When removed from their sockets they may be misplaced or lost.

In another arrangement, disclosed in the Specification of European Patent Application No. 0 148 619, the intermediate armrests which are used to define the narrower seats are pivotally mounted so that they can be swung down to an ineffective position in which they are said to be concealed by a part of the backrest of the seat unit which is folded forwardly over them to form an alternative wide armrest to define and separate the wider seats.

Whilst this arrangement overcomes the problem of possible loss of the intermediate armrests, additional constructional features are required in the backrest to provide the forwardly-foldable part which forms the alternative wide armrest. The forward folding of the backrest part leaves a gap in the backrest of the unit which is somewhat unsightly. Furthermore, although the intermediate armrests are said in the Specification to be "concealed" in their folded position, the drawings accompanying the Specification show that they are visible in that position as redundant encumbrances just above the seat cushion.

According to the present invention an adjustable seating unit of the kind comprising backrest and bottom parts for a plurality of seats abreast and intermediate armrest defining and separating the seats, each said intermediate armrest being movable between laterally-spaced operative positions so that the width of the defined seats can be adjusted, the said seating unit including complementary components on the intermediate armrests and on fixed parts of the seating unit adjacent to the said laterally-spaced operative positions for selective engagement to locate the intermediate armrests positively in their respective operative positions, is characterised in that each intermediate armrest is anchored to the seating unit by a linkage permitting the said intermediate armrest to be moved between said laterally-spaced operative positions without separation from the seating unit.

Preferred complementary components are a plug element on each intermediate armrest and a socket element for receiving the plug adjacent to each of the said laterally-spaced operative positions.

An embodiment of the invention is illustrated by way of example by the accompanying drawing, in which

Figure 1 is a diagramatic front elevation of a seating unit of the kind described, showing the intermediate armrests in their positions providing seats for three passengers,

Figure 2 is a view similar to Figure 1, showing the intermediate armrests in their positions providing seats for two passengers, and

Figure 3 is a fragmental perspective view of an intermediate armrest and its anchoring linkage.

The seating unit comprises a backrest part 1 and a bottom part 2, each of width sufficient for three narrower seats, mounted on a support frame 3 (shown only in part). The backrest part 1 is divided into outer sections 4, each of width appropriate for a narrower seat, inner sections 5 of width equal to the difference X between the widths appropriate to the narrower and wider seats, and a middle section 6. The sections 4, 5 and 6 are pivotally connected to the support frame 3 for reclining movement, as is common in such seats, and each inner section 5 can be connected laterally by bolts, not shown, either to the middle section 6 or to the adjacent outer section 4 to provide backrest either for three narrower seats or two wider seats. Conventional control mechanisms, not shown, are included for controlling the reclining movements of the sections.

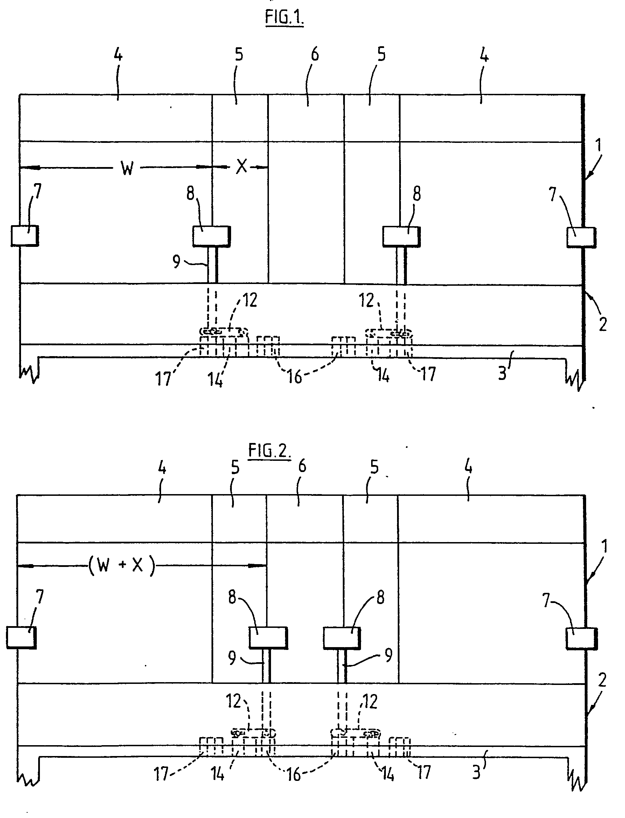

Outer armrests 7 are mounted at each side of the seating unit. Two intermediate armrests 8 are anchored to the support frame 3 by linkages which enable them to be moved laterally between the positions shown in Figure 1, in which the four armrests are substantially equally spaced apart by distances W appropriate for a narrower seat, and positions shown in Figure 2 in which they are spaced a distance (W+X) from the outer armrests which is appropriate for wider seats.

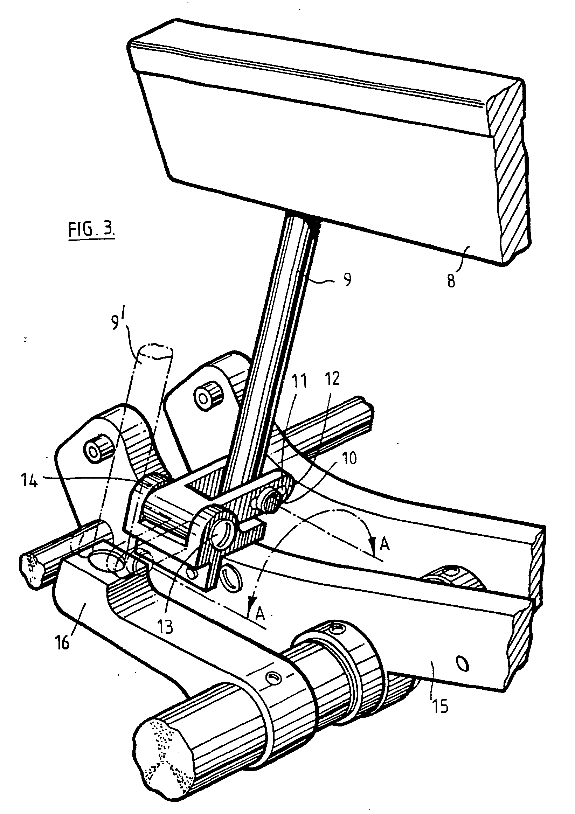

As most clearly shown in Figure 3, each intermediate armrest 8 is mounted on a pillar 9 through which passes a pin 10 which passes freely through and is slidable in a slot 11 in a link 12. The respective links 12 are pivotally connected by pins 13, parallel to the pins 10, secured in mounting saddles 14 secured to elements 15 of the support frame 3 which support the bottom part 2 on each side of the middle seat position. By swinging the link 12 about the pin 13, as indicated by the arrows A, whilst keeping the pillar 9 upright, the armrest 8 can be moved between the positions shown in Figures 1 and 2.

The pillar 9 extends beyond the pin 13 to form a plug element to engage selectively with socket elements 16, 17 secured to parts of the frame 3 in positions corresponding to the two positions of the intermediate armrests. The socket element 16 is shown in Figure 3, but in that figure the socket element 17, secured to the side of the element 15, is concealed.

Engagement of the plug element of the pillar 9 with the respective socket elements 16, 17, provides rigid location of the intermediate armrests 8 in their respective positions and the linkages comprising the pins 10 and 13, the links 12 and the mounting saddles 14 anchor the armrests 8 against removal and loss but enable them to be moved quickly and easily between their two positions.

## Claims

1. An adjustable seating unit of the kind comprising backrest and bottom parts (1, 2) for a plurality of seats abreast and intermediate armrests (8) defining and separating the seats, each said intermediate armrest (8) being movable between laterally-spaced operative positions so that the width of the defined seats can be adjusted, the said seating unit including complementary components (9, 16, 17) on the intermediate armrests (8) and on fixed parts (15) of the seating unit adjacent to the said laterally-spaced operative positions for selective engagement to locate the intermediate armrests (8) positively in their respective operative positions, characterised in that each intermediate armrest (8) is anchored to the seating unit by a linkage (10, 13, 12, 14) permitting the said intermediate armrest (8) to be moved between said laterally-spaced operative positions without separation from the seating unit.

2. An adjustable seating unit as claimed in Claim 1, characterised in that the complementary components are a plug element (9) on each intermediate armrest (8) and a socket element (16, 17) for receiving a plug element (9) adjacent to each of the said laterally-spaced operative positions.

3. An adjustable seating unit as claimed in Claim 1 or Claim 2, characterised in that each linkage comprises a link (12), pivotally connected adjacent one end thereof to a fixed part (14) of the seating unit so as to swing laterally with respect to the seating unit and pivotally connected adjacent the other end thereof to an intermediate armrest (8).

## Patentansprüche

1. Einstellbare Sitzeinheit in der Bauweise, die eine Rükkenlehne und Bodenteile (1, 2) für eine Vielzahl von Sitzen nebeneinander und dazwischen befindlichen Armlehnen (8) aufweist, welche die Sitze begrenzen und trennen, wobei jede dazwischenliegende Armlehne (8) zwischen seitlich im Abstand befindlichen Funktionsstellungen so bewegbar sind, daß die Breite der gebildeten Sitze eingestellt werden kann, und wobei die Sitzeinheit komplementäre Komponenten (9, 16, 17) an den dazwischenliegenden Armlehnen (8) und an feststehenden Teilen (15) der Sitzeinheit angrenzend an die seitlich im Abstand befindlichen Funktionsstellungen für einen selektiven Eingriff aufweist, so daß die dazwischenliegenden Armlehnen (8) zwangsweise in ihren jeweiligen Funktionsstellungen positioniert werden, dadurch gekennzeichnet, daß jede dazwischenliegende Armlehne (8) an der Sitzeinheit durch ein Gestänge (10, 13, 12, 14) verankert ist, das er erlaubt, das die dazwischenliegende Armlehne (8) zwischen den seitlich im Abstand befindlichen Funktionsstellungen ohne Abtrennung von der Sitzeinheit bewegbar ist.

2. Einstellbare Sitzeinheit nach Anspruch 1, dadurch gekennzeichnet, daß die komplementären Komponenten ein Zapfenelement (9) an jeder zwischenliegenden Armlehne (8) und ein Buchsenelement (16, 17) für die Aufnahme eines Zapfenelements (9) angrenzend an jede der seitlich im Abstand befindlichen Funktionsstellungen sind.

3. Einstellbare Sitzeinheit nach Anspruch 1 oder Anspruch 2 dadurch gekennzeichnet, daß jedes Gestänge einen Lenker (12) aufweist, der in der Nähe seines einen Endes mit einem feststehenden Teil (14) der Sitzeinheit so verbunden ist, das er seitlich bezüglich der Sitzeinheit schwenken kann, und in der Nähe seines anderen Endes mit einer dazwischenliegenden Armlehne (8) schwenkbar verbunden ist.

## Revendications

1. Ensemble réglable formant siège, du type qui comprend des parties de dossier et des parties inférieures (1, 2) correspondant à plusieurs sièges placés côté à côte et des accoudoirs intermédiaires (8) délimitant et séparant les sièges, chaque accoudoir intermédiaire (8) étant mobile entre des positions de fonctionnement latéralement espacées afin que la largeur des sièges délimités puisse être réglée, l'ensemble formant siège comprenant des éléments complémentaires (9, 16, 17) placés sur les accoudoirs intermédiaires (8) et sur des parties fixes (15) de l'ensemble formant siège près des emplacements latéralement espacés de fonctionnement afin que ces éléments coopèrent sélectivement et assurent le positionnement des accoudoirs intermédiaires (8) dans leurs positions respectives de travail d'une manière positive, caractérisé en ce que chaque accoudoir intermédiaire (8) est fixé à l'ensemble formant siège par une tringlerie (10, 13, 12, 14) permettant un déplacement de l'accoudoir intermédiaire (8) entre ses position de travail latéralement espacées, sans qu'il soit séparé de l'ensemble formant siège.

2. Ensemble réglable formant siège selon la revendication 1, caractérisé en ce que les éléments complémentaires sont un élément d'enfichage (9) monté sur chaque accoudoir intermédiaire (8) et un élément formant douille (16, 17) destiné à loger l'élément d'enfichage (9), près de chacune des positions de travail latéralement espacées.

3. Ensemble réglable formant siège selon la revendication 1 ou 2, caractérisé en ce que chaque tringlerie comporte une bielle (12) articulée près d'une première extrémité sur une partie fixe (14) de l'ensemble formant siège afin qu'elle puisse basculer latéralement par rapport à l'ensemble formant siège, et articulée près de son autre extrémité sur un accoudoir intermédiaire (8).

EP 0 227 239 B1

FIG.1.

FIG.2.

1

EP 0 227 239 B1

FIG. 3.